# EUROPÄISCHE PATENTANMELDUNG

(11) **EP 1 077 030 A2**
(43) Veröffentlichungstag der Anmeldung: **21.02.2001**
(21) Anmeldenummer: 00116654.5
(22) Anmeldetag: 02.08.2000
(51) Int. Cl.: A21B 3/16

(54) **Backofendüse mit Schabeleiste**

(30) Priorität: 11.08.1999 DE 29913995 U
(71) Anmelder: WAP Reinigungssysteme GmbH & Co., 89287 Bellenberg (DE)
(72) Erfinder: Breite, Christian, 87755 Krichhaslach (DE)
(74) Vertreter: Riebling, Peter, Dr.-Ing.

(57) **Zusammenfassung**

Die Erfindung betrifft eine Backofendüse, bestehend aus einem Gehäuse, in welches mindestens ein Saugkanal eingebracht ist, welcher über einen Rohrstutzen mit einem externen Sauggerät in Verbindung steht, und einer Schabeleiste, welche im/am Saugkanal an der Unterseite der Backofendüse angeordnet ist, **dadurch gekennzeichnet,** daß mindestens ein zusätzlicher Wälzkörper an der Unterseite der Backofendüse vorgesehen ist, welcher während der Benutzung der Backofendüse das Gewicht der Backofendüse und die Anpreßkraft durch den Benutzer mindestens teilweise tragend aufnimmt. Wesentlicher Vorteil der Erfindung ist, daß durch die zusätzliche Anordnung der Wälzkörper an der Unterseite der Backofendüse zum einen die Lebensdauer der Schabeleiste erheblich erhöht wird und zum anderen eine Dosierung der abzuschabenden Schichtdicke der Backreste möglich wird. Hieraus folgt ein ermüdungsfreies, effektives Arbeiten und eine langanhaltende, konstante Saugwirkung der erfindungsgemäßen Backofendüse.

## Beschreibung

Die Erfindung betrifft eine Backofendüse mit Schabeleiste nach dem Oberbegriff des Patentanspruches 1.

Derartige Backofendüsen sind beispielsweise mit der DE 274 15 503 A1 bekannt geworden, wo ein Herdplattenhobel bzw. ein Backofenhobel mit Saugdüse beschrieben wird, welcher aus einem Guß- oder Eisenblock besteht, der innen saugdüsenähnlich ausgegossen oder ausgefräst ist; weiterhin besteht dieser Herdplatten-/Backofenhobel aus einem Saugstutzen, einer Platte und einem aufsteck- oder aufschraubbaren Halte- und Saugrohr mit am Ende aufsteckbarem konischen Gummiverbindungsstück sowie aus zwei auswechselbaren Schabern bzw. Messern.

Mit derartigen Backofendüsen mit Schabeleisten werden bzw. Backreste von einem Backblech dadurch entfernt, daß die Backofendüse derart über das Backblech gezogen wird, daß die Schabeleiste mit den auf dem Backblech vorhandenen Inkrustierungen (Backreste) schabend in Kontakt kommt, so daß diese Inkrustierungen vom Backblech gelöst werden. Die durch die Schabewirkung der Schabeleiste gelösten Backreste werden dann durch die entsprechend geformte Saugdüse innerhalb des Guß- oder Eisenblockes durch den Saugstutzen in das Halte- bzw. Saugrohr eingesaugt und von dort aus in einen geeigneten Auffangbehälter geleitet.

Nachteil dieser Ausführungsform des Standes der Technik ist, daß die gesamte Gewichtslast der Backofendüse mit Schabeleiste auf der Schabeleiste selbst liegt und somit die Schabeleiste einem erhöhten Verschleiß ausgesetzt ist. Die Schabeleiste nach dem Stand der Technik muß also nicht nur die Kraftwirkungen aufnehmen, welche durch die Abschabungen der Backreste herrühren, sondern eben auch durch das Eigengewicht der Backofendüse selbst bzw. durch den zusätzlichen Anpreßdruck des Bedieners.

Es entstehen durch den bestimmungsgemäßen Gebrauch der Backofendüse mit Schabeleiste nach dem Stand der Technik nicht nur lediglich konstante Verschleißerscheinungen auf Grund von reibungsbedingtem Abrieb, sondern es können auch auf Grund zu großer Schichtdicken der Inkrustierungen oder auf Grund zu großer Anpreßkräfte oder zu zügigen Vorschubes durch den Benutzer aus der Schabeleiste ganze Bruchstücke herausbrechen oder sogar die gesamte Schabeleiste aus der Halterung der Backofendüse herausfallen.

Ein weiterer Nachteil der herkömmlichen Backofendüse mit Schabeleiste ist, daß eine Dosierung der Schichtdicke der abzuschabenden Inkrustierungen praktisch nicht möglich ist und somit immer die volle Schichtdicke abgeschabt werden muß und ein kontinuierliches und ermüdungsfreies Arbeiten dadurch nicht möglich ist.

Daher ist es Aufgabe der vorliegenden Erfindung, eine Backofendüse mit Schabeleiste nach dem oben erwähnten Stand der Technik derart weiterzubilden, daß die Lebensdauer der Backofendüse mit Schabeleiste wesentlich erhöht wird, eine Dosierung der abzuschabenden Schichtdicke der Inkrustierungen möglich ist und somit eine konstante Schabe- und Saugwirkung erzielt wird.

Zur Lösung der oben genannten Aufgabe dient die technische Lehre des Patentanspruches 1.

Wesentliches Merkmal hierbei ist, daß an der Unterseite der Backofendüse, mindestens ein zusätzlicher Wälzkörper vorgesehen ist, welcher Wälzkörper während der Benutzung der Backofendüse das Gewicht der Backofendüse und die Anpreßkraft durch den Benutzer mindestens teilweise tragend aufnimmt.

Hierbei besteht die Backofendüse aus einem Gehäuse, in welches mindestens ein Saugkanal eingebracht ist, welcher über einen Rohrstutzen mit einem externen Sauggerät in Verbindung steht, und einer Schabeleiste, welche im/am Saugkanal an der Unterseite der Backofendüse angeordnet ist.

In einer bevorzugten Ausführungsform der Erfindung ist es vorgesehen, daß die Achsen der Wälzkörper in einer Ebene liegen, diese Ebene etwa parallel zur Schabeleiste angeordnet ist und je einer dieser Wälzkörper im Außenbereich der Schabeleiste, in Vorschubrichtung gesehen, hinter der Schabeleiste liegt, also dem Bediener näher zugewandt ist.

Die Anordnung der Wälzkörperachsen innerhalb einer Ebene hat nun den Vorteil, daß erfindungsgemäß zum einen die Last der Schabedüse mindestens teilweise durch diese Wälzkörper aufgenommen werden kann, zum anderen die Schabeleiste durch Verkippen der Backofendüse um diese Wälzenachse herum nach vorn in Eingriff mit den Inkrustierungen auf dem Backblech gebracht werden kann.

In einem ersten Verfahrensschritt wird also die erfindungsgemäße Backofendüse mit Schabeleiste auf den Wälzkörpern auf das Backblech aufgesetzt, wobei die Schabeleiste noch nicht in Eingriff mit den Inkrustierungen kommt und das gesamte Gerät im wesentlichen parallel über dem zu reinigenden Backblech sich befindet.

Nun wird bei laufendem Absaugmotor die Backofendüse ständig nach vorn und hinten geschoben, wobei gleichzeitig die Backofendüse leicht nach vorn verkippt wird, so daß die Schabeleiste in Eingriff mit den Backresten gelangen kann.

Je nach Handkraft des Bedieners, je nach Vorschubgeschwindigkeit, je nach Festigkeit und Art der Inkrustierungen und je nach Gewicht der Backofendüse, wird nun entsprechend dem Neigungswinkel der Backofendüse bzw. dem Verkippungswinkel nach vorn eine entsprechende Menge an Backresten bzw. eine entsprechende Schichtdicke der Backreste vom Backblech abgeschabt.

Diese Backreste, in Form von unterschiedlich großen Bruchstücken, werden nun durch den Saugkanal in den Rohrstutzen und von dort aus in einen entsprechenden Auffangbehälter geleitet.

Die Schabeleistung der Backofendüse wird also durch den Verkippungswinkel der Backofendüse nach vorn durch den Betreiber selbst nach Gefühl geregelt, und somit kann ein effektives Arbeiten mit der erfindungsgemäßen Backofendüse gewährleistet werden und zusätzlich die Lebensdauer der Backofendüse bzw. der Schabeleiste um ein Vielfaches erhöht werden, da nicht die gesamte Last der Backofendüse und nicht der gesamte Anpreßdruck durch den Bediener auf der Schabeleiste lasten, sondern eben durch die Wälzkörper an der Schabeleiste mindestens teilweise mitgetragen werden.

Die Schabewirkung ist nicht lediglich in Vorschubrichtung nach vorn gegeben, sondern auch beim Zurückziehen der Backofendüse, jedoch ist die Wirkung unterschiedlich, je nach Anordnung der Schabeleiste am Saugmund des Saugkanals. Bevorzugt wird, wenn die Schabeleiste in Vorschubrichtung hinter dem Saugmund des Saugkanals angeordnet ist, d. h. dem Benutzer näher liegt, und dadurch eine geeignete Schabewirkung lediglich in Vorschubrichtung vom Benutzer weg entsteht, da dies eine bequemere Bedienung ermöglicht. Die Erfindung ist aber darauf nicht beschränkt, die Schabeleiste kann auch etwa in der Mitte des Saugmundes des Saugkanals liegen, in jeder beliebigen anderen Lage oder etwa in Vorschubrichtung vor dem Saugmund des Saugkanals, d. h. vom Benutzer weiter entfernt.

In der ersten Ausführungsform ist es also vorgesehen, die Achsen der Wälzkörper sämtlich in eine Ebene zu legen, um die Backofendüse durch Verschwenken um diese Ebene, bzw. um die gemeinsame Wälzenachse herum nach vorn, die Schabeleistung der erfindungsgemäßen Backofendüse durch den Betreiber, je nach Art der Inkrustierungen, einzustellen.

Hierbei ist es vorgesehen, daß bevorzugt zwei Wälzkörper in dieser Ebene angeordnet sind oder aber lediglich ein etwas längerer, mit im wesentlichen der Breite der Backofendüse, oder mehrere kürzere dieser Wälzkörper. Wichtig hierbei ist jedoch immer, daß die Wälzkörper an der Unterseite der Backofendüse derart angeordnet sind, daß die Backofendüse nach vorn verschwenkt werden kann und somit die Schabeleiste in Eingriff mit den Backresten gelangen kann.

Bevorzugt wird hierbei, wenn die Achsen der Wälzkörper etwa parallel zur Schabeleiste angeordnet sind. In anderen Anwendungsfällen kann es jedoch vorteilhaft sein, die Achsen der Wälzkörper im Winkel zur Schabeleiste anzuordnen, um auch in unzugänglichere Ecken gelangen zu können. Auch soll es vorgesehen sein, die Schabeleiste nicht etwa senkrecht zum Rohrstutzen bzw. der Längsachse der Backofendüse anzuordnen, sondern im Winkel, so daß hier eine andere Lenkung der gelösten Backreste möglich wird, was natürlich eine anderweitigen Saugkanal nötig macht.

In einer Weiterbildung der Erfindung ist es vorgesehen, daß mehrere Wälzkörper an der Unterseite der Backofendüse angeordnet sind, welche mindestens teilweise nicht in der gleichen Ebene liegen und dadurch die gesamte Backofendüse mitsamt der Schabeleiste, etwa parallel zum Untergrund (Backblech), in einer Arbeits-Grundstellung zu liegen kommt. Um in dieser Ausführungsform nun die Schabeleistung einstellen zu können, muß es vorgesehen sein, daß die Schabeleiste durch den Betreiber nach unten auf das Backblech hin mittels einer entsprechenden Mechanik abgesenkt werden kann.

Hierbei ist es vorgesehen, daß entweder der Schaber selbst und/oder die Wälzkörper höhenverstellbar an der Unterseite der Backofendüse angeordnet sind, so daß dadurch die Schabeleiste in Eingriff mit den Inkrustierungen kommen kann und dadurch eine dosierbare Schabewirkung erzielt werden kann.

Es ist bevorzugt vorgesehen, daß beispielsweise nur die Wälzkörper, welche in gleicher Ebene liegen, höhenverstellbar angeordnet sind, es können aber auch sämtliche Wälzkörper höhenverstellbar vorgesehen sein.

Vorzugsweise ist jedoch die Schabeleiste selbst höhenverstellbar an der Unterseite der Backofendüse angeordnet und kann auf einfache Art und Weise durch den Betreiber über einen Schieber und eine entsprechende Umlenkmechanik in Richtung Backblech abgesenkt werden oder vom Backblech weg in Richtung Backofendüse wieder hochgefahren werden. So ist es auf einfache Art und Weise möglich, die Schabeleistung der Backofendüse zu dosieren und gleichzeitig ein ermüdungsfreies Arbeiten zu ermöglichen, da ja im Gegensatz zur ersten Ausführungsform die Backofendüse nicht ständig um die gemeinsame Achse der Wälzkörper nach vorn verschwenkt werden muß, um die Schabeleiste in Eingriff mit den Inkrustierungen zu bringen.

Weiterer Vorteil dieser Ausführungsform ist, daß eine unbeabsichtigte und unzulässig erhöhte Anspreßkraft durch den Betreiber auf die Backofendüse nicht auftreten kann und somit die Lebensdauer der Schabeleiste, im Vergleich zur ersten Ausführungsform, noch einmal erhöht werden kann.
Diese zweite Ausführungsform ist jedoch weniger kostengünstig und mit einem erhöhten mechanischen Aufwand verbunden, so daß die gesamte Backofendüse etwas mehr Gewicht besitzt und die Wälzkörper entsprechend tragkräftiger ausgeführt werden müssen und dadurch die Kosten für die Backofendüse erhöht werden.

Als Weiterbildung soll es auch vorgesehen sein, daß nicht lediglich in Vorschubrichtung vor (also vom Betreiber weiter entfernt) den Wälzkörpern eine einzige Schabeleiste angebracht ist, sondern daß mehrere Schabeleisten vor und zusätzlich dazu noch eine oder mehrere Schabeleisten hinter oder zwischen den Wälzkörpern angebracht sind.

Alle Schabeleisten vor, zwischen oder hinter den Wälzkörpern können unterschiedlich im Hinblick auf Material, Größe, Form und Höhenpositionierung über dem Backblech vorgesehen sein.

Im Extremfall können beispielsweise eine Vielzahl von Schabern in Vorschubrichtung vor den Wälzkörpern angeordnet sein, wobei die in Vorschubrichtung erste Schabeleiste die geringste Breite und den größten Abstand vom Backblech aufweist, die zweite eine bereits größere Breite und geringeren Abstand vom Backblech usw., bis hin zur letzten Schabeleiste, welche die größte Breite und den geringsten Abstand vom Backblech aufweist.

Dadurch kann eine automatische Dosierung der Schabeleistung erzielt werden, ohne daß, wie in der ersten Ausführungsform beschrieben, die Backofendüse nach vorne hin verschwenkt wird oder, wie in der zweiten Ausführungsform beschrieben, die Schabeleiste selbst bzw. die Wälzkörper hierzu höhenverstellt werden müssen.

Die einzelne Schabeleiste selbst kann selbstverständlich in den unterschiedlichsten Ausführungsformen an der Backofendüse angeordnet sein, bevorzugt wird jedoch eine Schabeleiste in einer einfachen, streifenförmigen Blechbandform. Dieses Blechband kann an der Unterseite, welche in den Kontakt mit den Inkrustierungen kommt, angefast sein oder gar eine messerartige, geschärfte Kante aufweisen.

In anderen Ausführungsformen ist es vorgesehen, daß zwei dieser bandförmigen Schabeleisten in einem bestimmten Winkel zueinander angeordnet sind und miteinander verbunden sind.

Hierdurch wird ein Effekt erzielt, der einem Schneepflug ähnlich ist, und dadurch kann zum einen die Schabeleistung optimiert werden, eine ruckartige Arbeitsweise (Stick-Slip-Effekt) der Backofendüse vermieden werden und gleichzeitig ein optimierter Abtransport der gelösten Backreste in Richtung Absaugkanal gewährleistet werden.

Hierbei wird bevorzugt, daß die beiden Teile der Schabeleiste einen Winkel von beispielsweise 120° einnehmen und die verbindende Kante in Vorschubrichtung vorn zu liegen kommt. Die vertikalen Flächen der jeweiligen Schabeleisten können einen Verkippungswinkel aufweisen, der durch die erste Ausführungsform durch Verkippen des gesamten Gerätes erreicht wird. Hierdurch wird ebenfalls ein Ablenkungseffekt der gelösten Partikel erzielt und die Absaugung dieser gelösten Partikel erleichtert.

Die Form der Schabeleiste selbst kann gerade sein, jedoch auch in einer konkav oder konvex gebogenen Form vorliegen.

Vorzugsweise sind die Schaber aus Kunststoff ausgebildet, jedoch können auch andere Materialien eingesetzt werden, wie beispielsweise Aluminiumlegierungen, Edelstahl oder Messing oder ähnliches.

In einer weiteren Ausführungsform kann es vorgesehen sein, daß die Wälzkörper nicht den gleichen Durchmesser aufweisen können, sondern beispielsweise die in Vorschubrichtung vornliegenden Wälzen im Durchmesser kleiner ausgebildet sind, als die dahinterliegenden Wälzen und dadurch die gesamte Backofendüse bereits einen Verkippungswinkel nach vorn besitzt, wodurch zum einen auch die Schabeleiste zur Lenkung der gelösten Partikel bereits einen Verkippungswinkel aufweist. Zum anderen wird dadurch das Handling der Backofendüse erleichtert, da der Bediener mit seinen Händen vom (heißen, fettigen, scharfkantigen) Backblech weiter entfernt arbeiten kann.

Weiterhin kann es vorgesehen sein, daß eine der lastaufnehmenden Wälzkörper einen motorischen Antrieb aufweist oder aber die gesamte erfindungsgemäße Backofendüse durch einen externen Antrieb in Vorschubrichtung nach vorn und wieder zurück angetrieben wird.

In einer Weiterbildung der Erfindung kann es vorgesehen sein, daß die Wälzkörper selbst nicht lediglich um eine Achse drehbar ausgebildet sind, sondern daß diese Wälzkörper um zwei Achsen drehbar ausgebildet sind, also zum einen um die Rotationsachse in und entgegen der Vorschubrichtung und zum anderen in ihrer Hochachse, wodurch ein Verschieben der Backofendüse in zweidimensionaler Richtung auf dem Backblech möglich wird und dadurch die Effizienz und die Schabeleistung der Backofendüse wiederum gesteigert werden.

Da die Schabeleiste dem Düsengehäuse nach unten hin in Richtung Backblech vorsteht, entsteht seitlich eine Öffnung für eine starke Randabsaugung und gleichmäßige Saugstromverteilung über die gesamte Schabebreite.

Der schmale Saugmund an der Unterseite des Düsengehäuses ermöglicht es, die Enden des Backbleches, welche im Allgemeinen etwas tiefer liegen, zu reinigen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im folgenden wird die Erfindung an Hand von lediglich einen Ausführungsweg darstellenden Zeichnungen näher erläutert. Hierbei gehen aus den Zeichnungen und ihrer Beschreibung weitere wesentliche Merkmale und Vorteile der Erfindung hervor.

Es zeigen:
- Fig. 1:: die erfindungsgemäße Backofendüse mit Schabeleiste und Wälzkörpern in einer Rückansicht in den offenen Rohrstutzen gesehen;
- Fig. 2:: eine Draufsicht der erfindungsgemäßen Backofendüse nach Figur 1;
- Fig. 3:: eine Seitenansicht im Schnitt entlang der Linie III-III in Figur 1;
- Fig. 4:: einen Schnitt entlang der Linie IV-IV in Figur 1; Fig. 5: einen vergrößerten Ausschnitt im Bereich der Schabeleiste gemäß den Figuren 3 und 4.

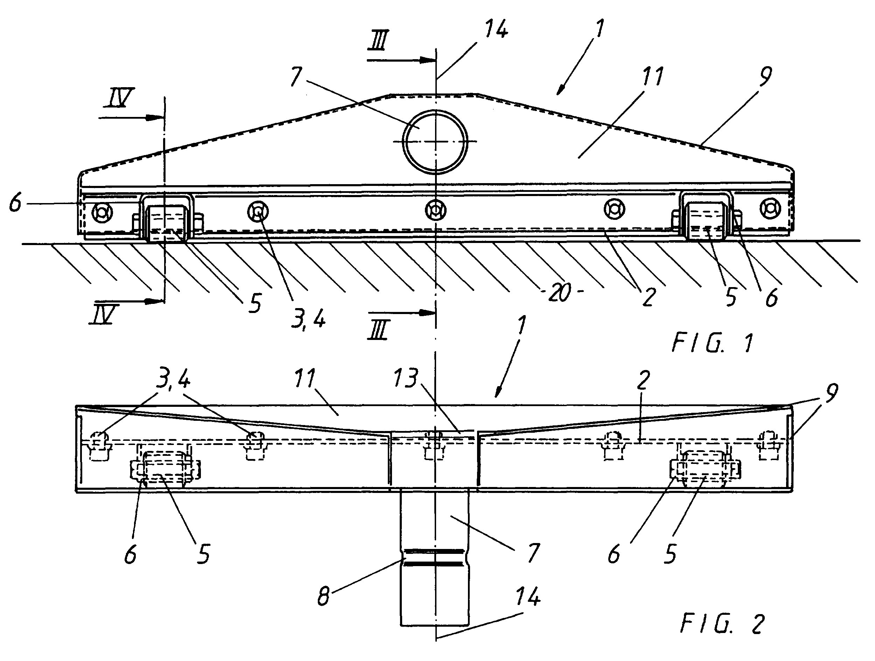

Figur 1 zeigt die Rückansicht der erfindungsgemäßen Backofendüse 1 mit Schabeleiste 2 und den Wälzkörpern 5 mit Blick in den offenen Rohrstutzen 7.

Die gesamte Backofendüse ist insgesamt spiegelsymmetrisch um die Symmetrielinie 14 ausgebildet.

Der Rohrstutzen 7 ist am Düsengehäuse 9 befestigt, im wesentlichen zu diesem senkrecht, und bildet die direkte Verbindung zum Saugkanal 11 und zur nicht dargestellten externen Saugeinrichtung. Das Düsengehäuse 9 selbst ist, aus der Rückansicht gesehen, etwa dreieckförmig ausgebildet, wobei im Bereich des Rohrstutzens 7 das Eck entsprechend abgeflacht ist.

Unterhalb des Rohrstutzens 7 ist auch über die gesamte Breite des Gehäuses 9 die Schabeleiste 2 angeordnet und mittels Befestigungselementen 3 dort befestigt, wobei diese Befestigungselemente 3 bevorzugt aus Schrauben gebildet werden, welche in entsprechende Langlöcher 4 im Gehäuse 9 eingreifen und somit die Schabeleiste 2 höhenverstellbar ausgebildet ist.

Im äußeren Bereich des Gehäuse 9 sind die Wälzkörper 5 über eine bügelförmige Halterung 6 derart befestigt, daß bei etwa horizontaler Ausrichtung der Backofendüse1, in bezug auf die zu reinigende Oberfläche 20, diese Wälzkörper einen geringeren Abstand zum Untergrund 20 aufweisen als die Schabeleiste 2. Hierdurch wird erreicht, daß die Schabeleiste 2 durch die Wälzkörper 5 derart

unterstützt wird, daß das Gewicht der Backofendüse 1 mindestens teilweise durch die Wälzkörper 5 aufgenommen wird, wobei bei einer etwa horizontalen Lage der Backofendüse 1 zum Untergrund 20 ausschließlich die Wälzkörper 5 dort aufliegen und die Schabeleiste 2 damit nicht in Kontakt mit dem Untergrund 20 gelangt.

Die Schabeleiste 2 dient also hauptsächlich zum Abschaben der Inkrustierungen und weniger zur Aufnahme des Gewichtes der Backofendüse 1 selbst.

In Figur 2 ist die Draufsicht der erfindungsgemäßen Backofendüse gemäß Figur 1 dargestellt, wobei auch hier zu sehen ist, daß die gesamte Backofendüse 1 spiegelsymmetrisch um die Symmetrielinie 14 angeordnet ist und mit gleichen Bezugszeichen gleiche Bauteile bezeichnet sind.

Es ist zu sehen, daß der Rohrstutzen 7 eine Ringnut 8 aufweist, welche die entsprechende Halterungsnut für den daran angeschlossenen Saugschlauch bildet.

Es ist weiterhin zu sehen, daß die Wälzkörper 5 in Vorschubrichtung hinter der Schabeleiste 2 angeordnet sind und jeweils ein Wälzkörper 5 links und rechts im äußeren Bereich des Düsengehäuses 9 über Halterungen 6 dort angeordnet ist.

In 'Vorschubrichtung' nach vorn bedeutet hier die Richtung vom Benutzer weg und in 'Vorschubrichtung' nach hinten bedeutet zum Benutzer hin. Der Benutzer hält die Backofendüse1 am Rohrstutzen 7 oder über einen daran angeordneten Handgriff fest und schiebt sie von sich weg nach vorn, und danach zieht er sie wieder zu sich her. Hierdurch entsteht die Schabwirkung der Schabeleiste 2, wobei die Backofendüse 1 nach vorn auf das Backblech gekippt werden muß und eine Schabewirkung ebenfalls beim Zurückziehen der Backofendüse 1 erfolgt.

In Figur 2 ist ebenfalls zu sehen, daß das Gehäuse 9 in Vorschubrichtung vorn nicht lediglich ein vertikales Gehäuseteil besitzt, sondern daß diese Vorderseite des Gehäuses 9 ebenfalls in Richtung Benutzer schräg verläuft. Somit entsteht ein Saugkanal 11, welcher im Bereich der Schabeleiste 2 maximale Größe besitzt und sich in Richtung Rohrstutzen 7 derart verjüngt, daß dort ein gewünschter Düseneffekt erzielt wird und somit die Bruchstücke der Inkrustierungen entsprechend geeignet abgesaugt werden können.

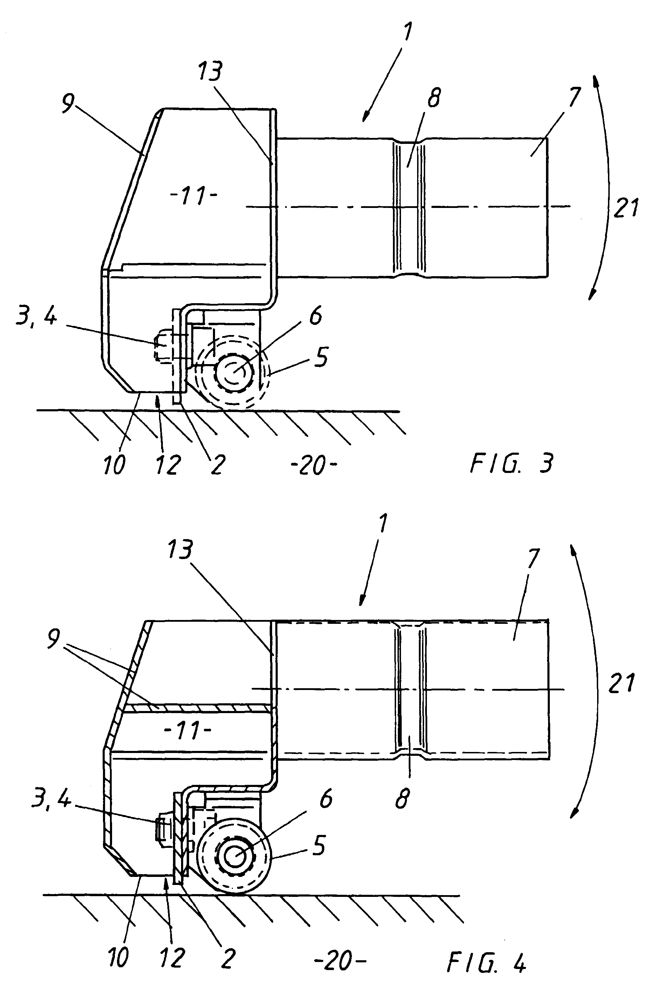

Figur 3 zeigt einen Schnitt entlang der Linie III-III gemäß der Figur 1, wobei mit gleichen Bezugszeichen gleiche Bauteile bezeichnet sind.

In der Figur wird noch einmal die sich verjüngende Form des Düsenkanals 11 deutlich.

Auch sieht man hier, daß, bei im wesentlichen horizontaler Lage der Backofendüse 1, lediglich die Wälzkörper 5 auf dem Backblech 20 aufliegen und dadurch die Schabeleiste 2 nicht in Kontakt mit dem Backblech 20 kommt und dadurch ein geringerer Verschleiß erzielt wird sowie eine verminderte Schiebeleistung nötig ist, durch verringerten Reibungsaufwand.

Die Schabeleiste 2 ist hier also lediglich für das Abschaben der Beläge auf den Backblechen 20 eingesetzt und nicht zum Halten des Gewichtes der Backofendüse 1 selbst. Die abgetragene Schichtdicke der Inkrustierungen auf dem Backblech 20 läßt sich durch entsprechendes Verschwenken der Backofendüse um die Schwenkrichtung 21 erreichen, wodurch der Abstand der Schabeleiste 2 zum Backblech 20 verringert oder vergrößert wird.

Durch die Bewegung der Backofendüse 1 nach vorn oder hinten, vom Benutzer weg oder zu ihm hin, werden also die Backreste durch die Schabeleiste 2 von dem Backblech 20 abgeschabt, zerteilt und vor sich hergeschoben, so daß durch den am unteren Saugmund 12 an der Unterkante 10 des Düsengehäuses herrschenden Unterdruck diese in den Saugkanal 11 eingezogen werden, welcher Saugkanal sich nach oben hin verjüngt und die Backreste durch diesen Saugkanal 11 durchgesaugt werden, in Richtung obere Saugöffnung 13.

Diese obere Saugöffnung 13 bildet die Verbindung zwischen Gehäuse 9 und Rohrstutzen 7, durch welchen Rohrstutzen 7 dann die Backreste weiter hindurchgesaugt werden in Richtung eines nicht näher dargestellten Auffangbehälters.

Figur 4 zeigt im wesentlichen dieselbe Darstellung wie Figur 3, jedoch wird der Schnittverlauf zwischen der Linie IV-IV gemäß Figur 1 gezeigt. Hierbei bezeichnen wiederum gleiche Bezugszeichen die gleichen Bauteile.

Im Unterschied zur Figur 3 ist hier dargestellt, daß der Saugkanal 11 in diesem Bereich, nämlich dem Schnitt durch den außen am Gehäuse liegenden Wälzkörper 5, volumenmäßig noch wesentlich größer ausgebildet ist als im Bereich der Schnittlinie III-III gemäß Figur 3.

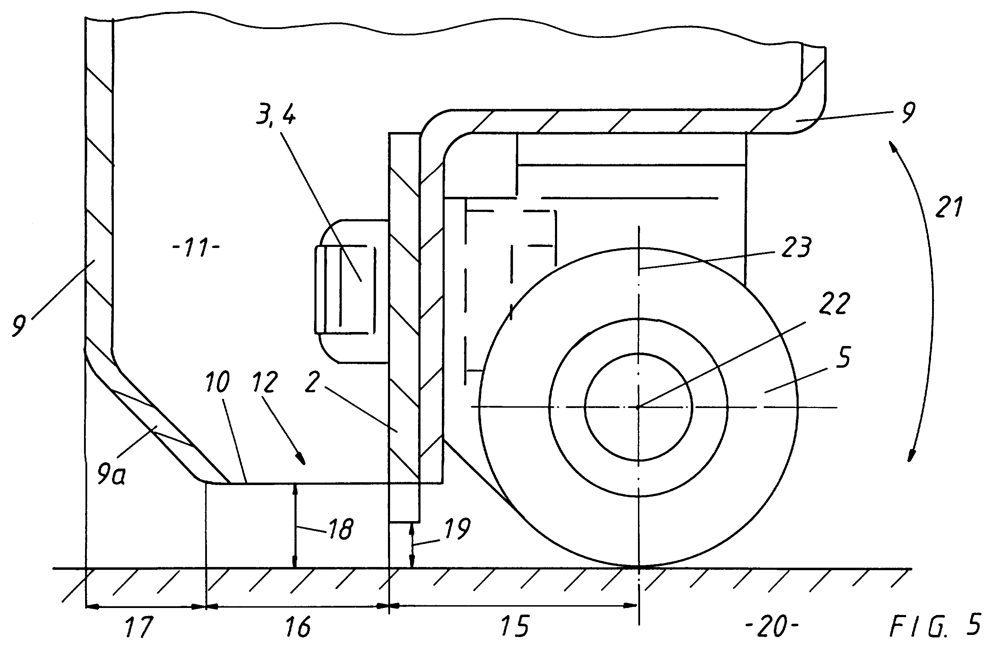

Mit Figur 5 ist eine vergrößerte Darstellung des Schnittes im Bereich der Schabeleiste 2 dargestellt, wobei wieder gleiche Bezugszeichen gleiche Bauteile darstellen.

Es ist zu sehen, daß die Schabeleiste 2 über das Befestigungselement 3 und den Langlöchern 4 höhenverstellbar ausgebildet ist.

Durch eine entsprechende Auswahl der Geometrieverhältnisse bzw. der Abstände der Bauteile läßt sich eine entsprechend günstige Saugleistung bzw. Schabewirkung der erfindungsgemäßen Backofendüse erreichen.

In Figur 5 sind diese geometrischen Verhältnisse dargestellt, und mit dem Bezugszeichen 15 ist der Abstand zwischen der Achse des Wälzkörpers 5 und der Vorderkante der Schabeleiste 2 dargestellt. Mit dem Bezugszeichen 16 ist der Abstand von der Vorderkante der Schabeleiste 2 bis zum Verbindungspunkt der Unterkante 10 des Düsengehäuses und dem restlichen Düsengehäuse 9 dargestellt. Mit dem Bezugszeichen 17 ist der horizontale Abstand des abgeschrägten Teiles 9a des Düsengehäuses 9 dargestellt.

Diese Anschrägung des Düsengehäuses 9a muß deshalb vorgesehen werden, da die Backofendüse zur Einstellung des Abstandes der Schabeleiste 2 zum Backblech 20 in Schwenkrichtung 21 verschwenkt wird und dadurch im Bereich 9a eine Bodenfreiheit benötigt wird.

Mit dem Bezugszeichen 18 ist der vertikale Abstand zwischen der Unterkante 10 des Düsengehäuses beim unteren Saugmund 12 und dem Backblech 20 dargestellt, mit dem Bezugszeichen 19 der vertikale Abstand 19 zwischen Schabeleiste 2 und Backblech 20, also die Spaltbreite 19. Für all die oben genannten Abstände 15 bis 19 wird vorausgesetzt, daß die Backofendüse im wesentlichen horizontal über dem Backblech 20 liegt.

Im folgenden werden optimale Verhältnisse der Parameter dargestellt für eine optimale Schabe- und Saugleistung der erfindungsgemäßen Backofendüse:

Das Verhältnis des Abstandes 16 zum Abstand 15 sollte zwischen 1:0,9 bis 1:2,5 sein.

Der Abstand 16 selbst sollte zwischen 8 mm und 15 mm liegen.

Der Abstand 17 sollte zwischen 5 mm und 15 mm liegen.

Der Abstand 18 sollte zwischen 2 mm und 8 mm liegen.

Die Spaltbreite 19 ist optimal bei etwa horizontal positionierter Backofendüse bei 5 mm und kann durch Verschwenken des Rohrstutzens 7 um die Wälzkörperachse 22 in Schwenkrichtung 21 nach oben hin bis auf 0 mm heruntergeführt werden, wodurch die Schabeleiste 2 vollkommen in Kontakt mit dem Backblech 20 gerät.

Mit der Hochachse 23 ist angedeutet, daß eine Verschwenkung der Backofendüse 1 auch in dieser Hochachse 23 in einer anderen Ausführungsform möglich sein soll und somit ein zweidimensionales Verfahren der Backofendüse 1 auf dem Backblech 20.

### Zeichnungslegende

- 1.: Backofendüse
- 2.: Schabeleiste
- 3.: Befestigungselement
- 4.: Langloch
- 5.: Wälzkörper
- 6.: Halterung
- 7.: Rohrstutzen
- 8.: Ringnut
- 9.: Düsengehäuse
- 10.: Unterkante Düsengehäuse
- 11.: Saugkanal
- 12.: unterer Saugmund
- 13.: obere Saugöffnung
- 14.: Symmetrielinie
- 15.: Abstand
- 16.: Abstand
- 17.: Abstand
- 18: . Abstand
- 19.: Spaltbreite
- 20.: Backblech
- 21: . Schwenkrichtung
- 22.: Wälzkörperachse
- 23.: Hochachse

## Patentansprüche

1. Backofendüse (1), bestehend aus einem Gehäuse (9), in welches mindestens ein Saugkanal (11) eingebracht ist, welcher über einen Rohrstutzen (7) mit einem externen Sauggerät in Verbindung steht, und einer Schabeleiste (2), welche im/am Saugkanal (11) an der Unterseite der Backofendüse (1) angeordnet ist, **dadurch gekennzeichnet,** daß mindestens ein zusätzlicher Wälzkörper (5) an der Unterseite der Backofendüse (1) vorgesehen ist, welcher während der Benutzung der Backofendüse (1) das Gewicht der Backofendüse (1) und die Anpreßkraft durch den Benutzer mindestens teilweise tragend aufnimmt.

2. Backofendüse (1) nach Anspruch 1, **dadurch gekennzeichnet,** daß die Achsen (22) der Wälzkörper (5) in einer gemeinsamen Ebene liegen.

3. Backofendüse (1) nach einem der Ansprüche 1 oder 2, **dadurch gekennzeichnet,** daß die Achsen (22) der Wälzkörper (5) teilweise nicht in einer gleichen vertikalen Ebene angeordnet sind, wobei mindestens eine Schabeleiste (2) höhenverstellbar ausgebildet ist und/oder mindestens diejenigen Wälzkörper (5) höhenverstellbar ausgebildet sind, welche in einer gemeinsamen Ebene liegen.

4. Backofendüse (1) nach einem der Ansprüche 1 bis 3, **dadurch gekennzeichnet,** daß die Wälzkörper (5) zwischen Schabeleiste (2) und Rohrstutzen (7) liegen.

5. Backofendüse (1) nach einem der Ansprüche 1 bis 4, **dadurch gekennzeichnet,** daß zusätzlich mindestens eine Schabeleiste (2) zwischen den Wälzkörpern (5) und dem Rohrstutzen (7) angeordnet ist.

6. Backofendüse (1) nach einem der Ansprüche 1 bis 5, **dadurch gekennzeichnet,** daß bei mehreren Reihen von Wälzkörpern (5) mindestens eine zusätzliche Schabeleiste (2) zwischen den Reihen der Wälzkörpern (5) vorgesehen sind.

7. Backofendüse (1) nach einem der Ansprüche 1 bis 6, **dadurch gekennzeichnet,** daß die Schabeleiste (2) in ihrer Längsachse etwa gerade ausgebildet ist.

8. Backofendüse (1) nach einem der Ansprüche 1 bis 7, **dadurch gekennzeichnet,** die Schabeleiste (2) in ihrer Längsachse konkav oder konvex bogenförmig ausgeführt ist.

9. Backofendüse (1) nach einem der Ansprüche 7 oder 8, **dadurch gekennzeichnet,** daß die Schabeleiste (2) im Querschnitt etwa rechteckförmig ausgebildet ist.

10. Backofendüse (1) nach einem der Ansprüche 7 bis 9, **dadurch gekennzeichnet,** daß die Schabeleiste (2) an ihrer stirnseitigen, unteren Schabeseite gewellt oder gezackt ausgeführt ist.

11. Backofendüse (1) nach einem der Ansprüche 1 bis 10, **dadurch gekennzeichnet,** daß die Befestigung der Schabeleiste (2) an dem Gehäuse (9) im Winkel zur Vertikalen und/oder zur Horizontalen vorgesehen ist.

12. Backofendüse (1) nach einem der Ansprüche 1 bis 11, **dadurch gekennzeichnet,** daß die Schabeleiste (2) aus mindestens zwei im Winkel zueinander angeordneten Teilen besteht.

13. Backofendüse (1) nach einem der Ansprüche 1 bis 12, **dadurch gekennzeichnet,** daß die Schabeleiste (2) aus Kunststoff, einer Aluminiumverbindung oder aus Messing besteht.

14. Backofendüse (1) nach einem der Ansprüche 1 bis 13, **dadurch gekennzeichnet,** daß bei mehreren Schabeleisten (2) unterschiedliche Spaltbreiten (19) vorgesehen sind und die Spaltbreite (19) bei der vordersten Schabeleiste (2), welche am weitesten entfernt vom Rohrstutzen (7) liegt, am größten ist und bei der hintersten Schabeleiste (2), welche am nahesten zum Rohrstutzen (7) liegt, die Spaltbreite (19) am geringsten ist.

15. Backofendüse (1) nach Anspruch 14, **dadurch gekennzeichnet,** daß die Breite der Schabeleisten (2) unterschiedlich gewählt werden und die Breite bei der vordersten Schabeleiste (2), welche am weitesten entfernt vom Rohrstutzen (7) liegt, am geringsten ist und die Breite der hintersten Schabeleiste (2), welche am nahesten zum Rohrstutzen (7) liegt, die Spaltbreite (19) am größten ist.

16. Backofendüse (1) nach einem der Ansprüche 1 bis 15, **dadurch gekennzeichnet,** daß die Wälzkörper (5), welche nicht in der gleichen Ebene zueinander liegen, unterschiedliche Außendurchmesser aufweisen.

17. Backofendüse (1) nach einem der Ansprüche 1 bis 16, **dadurch gekennzeichnet,** daß mindestens ein Wälzkörper (5) motorisch angetrieben ist oder daß die gesamte Backofendüse (1) über eine externe Vorschubeinrichtung angetrieben wird.

18. Backofendüse (1) nach einem der Ansprüche 1 bis 17, **dadurch gekennzeichnet,** daß die Wälzkörper (5) um ihre Wälzkörperachse (22) und um ihre Hochachse (23) drehbar am Gehäuse (9) gelagert sind.
